Europäisches Patentamt

European Patent Office

Office européen des brevets

(11) Publication number: 0 496 303 A1

# EUROPEAN PATENT APPLICATION

(21) Application number: 92100776.1

(22) Date of filing: 17.01.92

(51) Int. Cl.5: B24B 49/16, G05B 19/18

(30) Priority: 24.01.91 JP 24021/91

(43) Date of publication of application:
29.07.92 Bulletin 92/31

(84) Designated Contracting States:
DE FR GB

(71) Applicant: SHIN-ETSU HANDOTAI COMPANY,
LIMITED
4-2, Marunouchi 1-Chome
Chiyoda-ku Tokyo(JP)

(72) Inventor: Hirano, Yoshihiro
Kofu Apartment House A3-4, 791-4, Yanase
Annaka-shi, Gunma-ken(JP)
Inventor: Kita, Masao
Shinpu-Dormitory, 1610, Nishikamiisobe
Annaka-shi, Gunma-ken(JP)

(74) Representative: Patentanwälte Grünecker,
Kinkeldey, Stockmair & Partner
Maximilianstrasse 58
W-8000 München 22(DE)

(54) Grinding machine for cylindrically grinding as-grown crystalline ingot.

(57) A cylindrical-grinding machine includes a control and arithmetic processing unit (22) which is operative to control the feed speed of a wheel spindle stock (6) in such a manner that when the load on a wheel spindle motor (M2) used to rotate a grinding wheel (10) is smaller than a predetermined value, the wheel spindle stock (6) is fed rapidly at a first speed in order to reduce a waste of time, and when the load on the wheel spindle motor (M2) is greater than the predetermined value, the wheel spindle stock (6) is fed at a varying second speed so controlled as to maintain the load on the wheel spindle motor (M2) at a constant level. With this feed speed control, the cylindrical surface of a bar-like work (W) machined by the cylindrical-grinding machine is smooth and free from scars, and the work damages remaining in the work (W) is limited to a shallow region less than 70 μm in depth and extending uniformly in the vicinity of the ground surface.

FIG. I

The present invention relates to a grinding machine for cylindrically grinding an as-grown crystalline ingot so constructed as to continuously control the feed speed of a grinding wheel spindle stock in such a manner that in a no-load condition or during idling operation, the wheel spindle stock is fed at a high speed, and in a loaded condition or during grinding operation, the wheel spindle stock is fed at a varying speed controlled to maintain the load on a wheel spindle motor at a constant level.

Semiconductor wafers used for the fabrication of semiconductor integrated circuit devices are produced by: centering a round bar-like single crystal ingot (work) formed by a single crystal growth method such as the so-called Czochralski (CZ) method or the floating zone melting (FZ) method; finishing the outside surface of the single crystal ingot on a cylindrical-grinding machine to form a cylindrical single crystal ingot (work) having a predetermined diameter; slicing the cylindrical single crystal ingot perpendicularly across a longitudinal axis of the ingot so as to conform to a predetermined crystallographic orientation; lapping the single crystal slices on their opposite surfaces, followed by etching of the lapped single crystal slices; and finally polishing one surface of the etched single crystal slices.

In the cylindrical grinding operation performed by the cylindrical-grinding machine at a first stage of the semiconductor device fabrication process mentioned above, the wheel spindle stock is fed at a low speed equal to the general grinding speed even when the grinding wheel is in a no-load condition (during idling operation). This causes a waste of working time. In a loaded condition or during grinding operation, the feed speed of the wheel spindle stock is controlled by a feedback control system or a sequential control system. However, when the diameter of the work is not uniform, then a ground surface of the work is not uniform in appearance and has scratches or scars. In addition, the ground surface has relatively large work damages reaching to 150 $\mu$m in depth, for example. If the cylindrical-grinding operation is effected directly on the work without a previous working operation such as a centerless grinding, the foregoing difficulties take place constantly.

With the foregoing drawbacks of the prior art in view, it is an object of this invention to provide a cylindrical-grinding machine which is able to grind the outside surface of a round bar-like work smoothly and uniformly without forming scratches or scars thereon while controlling the depth of work damages in a range less than 70 $\mu$m from the ground surface.

In brief, a cylindrical-grinding machine of this invention is so constructed as to control the feed speed of a grinding wheel spindle stock in such a manner that in a no-load condition or during idling operation, the feed speed of the wheel spindle stock is increased to thereby reduce a waste of time, and in a loaded condition or during grinding operation, the feed speed of the wheel spindle stock is continuously controlled so as to maintain the load current of a wheel spindle motor constantly.

More specifically, a cylindrical-grinding machine of this invention includes a grinding wheel rotatable for performing a cylindrical grinding operation, a wheel spindle stock rotatably supporting thereon, and a speed setting unit for setting the feed speed of the wheel spindle stock. The cylindrical-grinding machine further includes an arithmetic processing unit for controlling the feed speed of the wheel spindle stock in such a manner that when a load on a wheel spindle motor used for rotating the grinding wheel is lower than a predetermined value (in a no-load condition or during idling operation), the wheel spindle stock is fed rapidly at a predetermined first speed, and when the load on the wheel spindle motor is greater than the predetermined value (in a loaded condition or during grinding operation), the wheel spindle stock is fed at a varying second speed so controlled as to maintain the load on the wheel spindle motor at a constant level.

The output power or the load current of the wheel spindle motor is input into a detecting means. When the output power or the load current detected by the detecting means is smaller than a predetermined value, this means that the grinding wheel while being driven by the wheel spindle motor is in a no-load condition or during idling operation. Thus, the wheel spindle stock is fed rapidly at a predetermined no-load feed speed. On the other hand, when the output power or the load current detected by the detecting means is greater than the predetermined value, this means that the grinding wheel is in a loaded condition or during grinding operation. In this instance, the wheel spindle stock is fed at a maximum value of a predetermined speed range set for a low speed grinding operation, so that the wheel spindle motor is able to rotate at a constant speed (rpm.). At the same time, the detected output power or the detected load current is compared with a desired value, and depending on the deviation from the desired value, a control action such as a proportional integral plus derivative (PID) control is performed by the control and arithmetic processing unit so as to control the feed speed of the wheel spindle stock in such a manner that the output power or the load current of the drive motor is equal to the desired value.

Since excessive fluctuations of the feed speed of the wheel spindle stock exert influence on the finishing conditions of the ground surface, a limiter may be provided to limit a control signal from the control and arithmetic processing unit within a predetermined range so as to control the feed speed of the wheel spindle stock within a predetermined range. In general, the upper limit of the feed speed is set by assigning a maximum value to the control signal. Consideration will be given to the question whether some restriction must be put on the lower limit of the feed speed. When the work of a single crystal as grown is set directly on the cylindrical-grinding machine, it is preferable that the depth of cut (or the amount of cross feed) of the grinding wheel is limited to keep the instantaneous load below a predetermined value during the grinding operation so as to avoid undue slow down of the feed speed exceeding the lower limit. As an alternative, when the minimum feed speed is reached during the grinding operation, the wheel spindle stock is stopped by the action of the limiter, then after setting the depth of cut of the grinding wheel to a smaller value than as before, the grinding operation is performed again with respect to the entire length of the work. In the latter case, it is unnecessary to pay careful attention to the depth of cut of the grinding wheel. With these two alternative measures, the ground surface of a work has an excellent appearance and the work damages remaining in the work in vicinity of the ground surface is controlled uniformly at a low level. As a further alternative, when the minimum feed speed is reached, a control action, such as PID control performed by a sequential control unit, is interrupted by the action of the limiter so as to maintain the minimum feed speed. This method is often advantageous because such a working load which requires a feed speed lower than the lower limit is unusual. The control of the output power or the load current of the driving motor is performed in a manner described below. When the wheel spindle motor is an induction motor, the output power of the induction motor is detected because the rotational torque is proportional to the output power. In cases where the wheel spindle motor is a direct current (dc) motor such as a separately exited dc motor or a shut dc motor, the load current of the dc motor is detected because the torque is proportional to the load current of a rotor.

The above and other objects, features and advantages of the present invention will become more apparent from the following description when making reference to the detailed description and the accompanying sheet of drawing in which a preferred structural embodiment incorporating the principles of the present invention is shown by way of illustrative example.

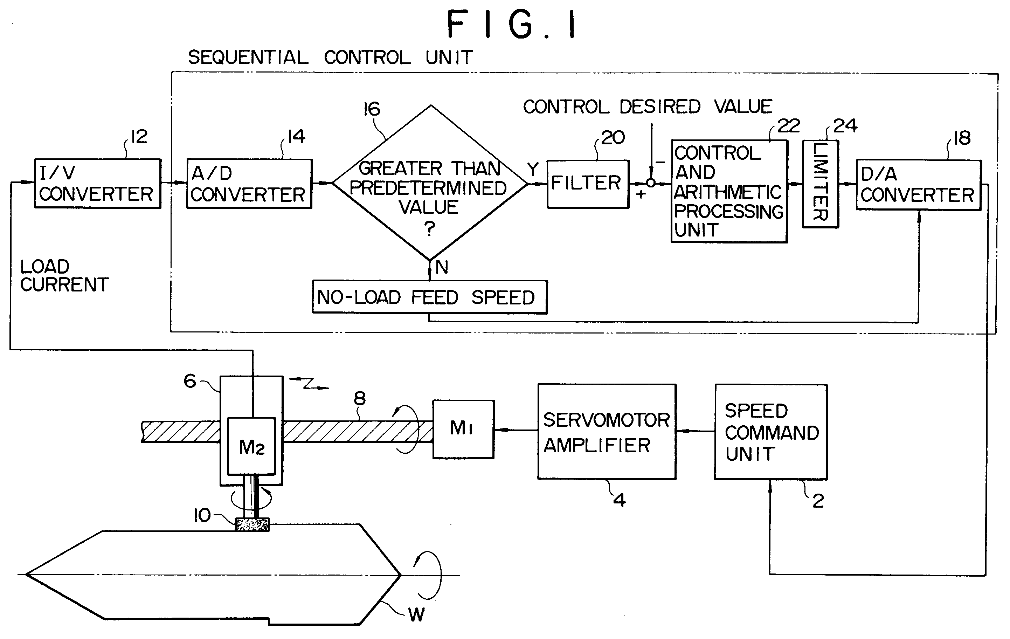

FIG. 1 is a block diagram illustrative of the general construction of a cylindrical-grinding machine according to the present invention.

The invention will be described below in greater detail with reference to the accompanying drawing.

FIG. 1 is a block diagram showing the general construction of a cylindrical-grinding apparatus embodying the present invention. In FIG. 1, numeral 2 is a speed command unit which produces a first electric signal for feeding a wheel spindle stock 6 at a no-load feed speed, a second electric signal for feeding the wheel spindle stock 6 at a maximum initial grinding speed, and a third electric signal for feeding the wheel spindle stock 6 at a variable grinding speed. These electric signals are fed through a servomotor amplifier 4 to a traverse motor M1 to control the number of rotation of the traverse motor M1, so that the wheel spindle stock 6 is fed at a speed determined by the electric command signal supplied from the speed command unit 2. The wheel spindle stock 6 and the traverse motor M1 are connected together by a known means. In the illustrated embodiment, they are connected via a screw rod 8 such that rotation of the screw rod 8 caused by the traverse motor M1 moves the wheel spindle stock 6 on and along the screw rod 8. A grinding wheel 10 is rotatably mounted on the wheel spindle stock 6 for grinding the outside surface of a round bar-like work W. The grinding wheel 10 is driven for rotation by a wheel rotating motor (wheel spindle motor) M2.

The wheel spindle motor M2 is driven to rotate at a predetermined speed (revolution per minute). The output power or the load current of the wheel spindle motor M2 varies with the working load, the feed speed of the wheel spindle stock 6 driven by the traverse motor M1, and the diameter of the work W. For example, if the load current is chosen as a control factor, the load current of the wheel spindle motor M2 is fed through a current to voltage (I/V) converter 12 and then through an analog to digital (A/D) converter 14 into a judgment means 16 which makes a judgment as to whether the load current is greater than a predetermined value or not (i.e., whether the grinding wheel 10 is in the grinding operation or not).

If the judgment made by the judgment means 16 indicates that the load current is smaller than the predetermined value, this means that the grinding wheel 10 is idling or in a no-load condition. Then, a preset no-load feed signal is sent via a digital to analog (D/A) converter 18 to the speed command unit 2 which in turn sends a command signal via the servomotor amplifier 4 to the traverse motor M1, thereby feeding the wheel spindle stock 6 rapidly at a no-load feed speed.

If the load current judged by the judgment means 16 is greater than the predetermined value, this means that the grinding wheel 10 is loaded or in the grinding operation. Then, a load current signal is fed through a filter 20 to a control and arithmetic processing unit 22 in which a control and arithmetic processing operation, such as a proportional integral plus derivative (PID) control, is performed according to the deviation from a desired value. A control signal issued from the control and arithmetic processing unit 22 is supplied to the speed command unit 2 via a limiter 24 and the D/A converter 18. A speed control signal issued from the speed command unit 2 is supplied via the servomotor amplifier 4 to the traverse motor M1, so that the wheel spindle stock 6 driven by the traverse motor M1 is fed at a speed which is controlled according to the speed control signal. In other words, the feed speed of the wheel spindle stock 6 is controlled such that the load current of the wheel spindle motor M2 used for rotating the grinding wheel 10 is equal to the predetermined desired value.

The A/D converter 14, the judgment means 16, the D/A converter 18, the filter 20, the control and arithmetic processing unit 22, and the limiter 24 jointly constitute a sequential control unit.

The limiter 24 mentioned above is not essential because the control and arithmetic processing unit 22 is able to control the feed speed of the wheel spindle stock 6 in such a manner that the load current of the wheel spindle motor M2 is equal to the predetermined desired value. However, the limiter 24 is provided to avoid the deterioration of finishing quality of the ground work which may occur when the feed speed of the wheel spindle stock 6 involves excessive fluctuations. The limiter 24 thus provided serves to limit the control signal from the control and arithmetic processing unit 22 within a predetermined range, thereby controlling the feed speed of the wheel spindle stock 6 within a predetermined range. For instance, the upper limit of the feed speed set by the limiter 24 is 30 mm/min for a work W of 4 to 8 inches in diameter, while the lower limit of the feed speed is 20 mm/min for a work W of 4 to 6 inches in diameter and is 10 mm/min for a work W of 8 inches in diameter. With the upper and lower limits thus set, a control operation such as a PID control is performed within a range between the upper and lower limits. In a region outside the upper limit, the wheel spindle stock 6 is fed at a speed equal to the upper limit. Similarly, in a region outside the lower limit, the wheel spindle stock 6 is fed at a speed equal to the lower limit.

As described above, the feed speed of the wheel spindle stock 6 is controlled in such a manner that the load current of the wheel spindle motor M2 used for rotating the grinding wheel 10 is equal to a predetermined desired value. With this controlled feed speed, an excellent finishing quality can be obtained even when the outside surface of the work W is finished only by a one-pass (single stroke) grind ing operation.

Experiments indicated that the ground surface of the work W had a trace of the grinding wheel of a uniform pitch, and no surface irregularity or scratch was observed on the ground surface. The work damages were limited to a shallow region extending uniformly in the vicinity of the ground surface and had a depth of less than 50 $\mu$m to 70 $\mu$m. The ground surface was rapidly etched off by 100 $\mu$m with an $HF$-$HNO_3$-$H_2O$ solution. The resulting surface was a smooth cylindrical surface which was sightly in appearance and free from trace of the grinding wheel.

The above-mentioned load current values which can be used for controlling the feed speed of the wheel spindle stock 6 are exemplified as follows. For purposes of control, the load current is converted into voltage (V). If a maximum load current value observed when the maximum torque is produced is given as 100% and corresponds to 5V, a desired load current value is set as 70% (3.5V) of the maximum load current value. A reference value or criterion, used for a judgment whether the grinding operation is going on or not, is set as 40% (2V) of the maximum load current value.

As described above, according to the cylindrical-grinding machine of this invention, the wheel spindle stock is fed rapidly at a high speed in a no-load condition (during idling operation) whereby a waste of time can be reduced. In the loaded condition or during grinding operation, the feed speed of the wheel spindle stock is controlled continuously in such a manner that the load current of the wheel spindle motor is kept constant. With this feed speed control, the outside diameter of a work can be ground uniformly and precisely.

Obviously various minor changes and modifications of the present invention are possible in the light of the above teaching. It is therefore to be understood that within the scope of the appended claims the invention may be practiced otherwise than as specifically described.

## Claims

1.  A cylindrical-grinding machine including a grinding wheel (10) rotatable for performing a cylindrical grinding operation with respect to a work (W) to be ground, a wheel spindle stock (6) rotatably supporting thereon said grinding wheel (10), and a speed setting unit (2) for setting the feed speed of said wheel spindle stock (6), characterized in that a control and arithmetic processing unit(22) is provided for controlling the feed speed of said wheel spindle stock (6) in such a manner that said wheel spindle stock (6) is fed rapidly at a predetermined first speed when a load on a wheel spindle motor (M2) used to rotate said grinding wheel (10) is lower than a predetermined value, and said wheel spindle stock (6) is fed at a varying second speed so controlled as to maintain the load on said wheel spindle motor (M2) at a constant level when the load on said wheel spindle motor (M2) is greater than said predetermined value.

2. A cylindrical-grinding machine according to claim 1, wherein selection between said first speed and said second speed is made by detecting a load on said wheel spindle motor (M2) while being controlled to rotate at a constant speed, and then comparing the detected load with a predetermined reference value.

3. A cylindrical-grinding machine according to claim 1, wherein said second speed of said wheel spindle stock (6) is initially set at a maximum value and then varies inversely with the load on said wheel spindle motor (M2) while being controlled at a constant speed.

# FIG. 1

SEQUENTIAL CONTROL UNIT

CONTROL DESIRED VALUE

```
┌─────────┐   ┌─────────┐       ◇16          ┌────────┐      ┌──────────┐ ┌───────┐  ┌─────────┐
│   I/V   │   │   A/D   │  GREATER THAN    Y  │        │   -  │ CONTROL  │ │       │  │   D/A   │
│CONVERTER│──▶│CONVERTER│──▶ PREDETERMINED ──▶│ FILTER │─────▶│ AND      │▶│LIMITER│─▶│CONVERTER│
│   12    │   │   14    │      VALUE          │   20   │   +  │ARITHMETIC│ │  24   │  │   18    │
└─────────┘   └─────────┘        ?            └────────┘      │PROCESSING│ │       │  └─────────┘
                                                             │  UNIT 22 │ └───────┘
```

LOAD CURRENT

N

NO-LOAD FEED SPEED

6

8

M₂

10

M₁

SERVOMOTOR AMPLIFIER

4

SPEED COMMAND UNIT

2

W

EP 0 496 303 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 908 301 (TOYODA KOKI K.K.) <br> * the whole document * <br><br> ----- | 1-3 | B24B49/16 <br> G05B19/18 |
| | | | TECHNICAL FIELDS SEARCHED (Int. Cl.5) |
| | | | B24B <br> G05B |

The present search report has been drawn up for all claims

| Place of search | Date of completion of the search | Examiner |
|---|---|---|
| THE HAGUE | 08 MAY 1992 | ESCHBACH D.P.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)